# EUROPÄISCHE PATENTSCHRIFT

(11) **EP 2 927 819 B1**
(45) Veröffentlichungstag und Bekanntmachung des Hinweises auf die Patenterteilung: **11.12.2019**
(21) Anmeldenummer: 14163531.8
(22) Anmeldetag: 04.04.2014
(51) Int. Cl.: G06F 11/30, G06F 16/11, G05B 19/042

(54) **VERFAHREN ZUR AUTOMATISCHEN VERARBEITUNG EINER ANZAHL VON PROTOKOLLDATEIEN EINES AUTOMATISIERUNGSSYSTEMS**
METHOD FOR AUTOMATICALLY PROCESSING A NUMBER OF PROTOCOL FILES OF AN AUTOMATION SYSTEM
PROCEDE DE TRAITEMENT AUTOMATIQUE DE PLUSIEURS FICHIERS JOURNAUX D'UN SYSTEME D'AUTOMATISATION

(43) Veröffentlichungstag der Anmeldung: 07.10.2015
(73) Patentinhaber: Siemens Aktiengesellschaft, 80333 München (DE)
(72) Erfinder: Roshchin, Mikhail, 85622 Feldkirchen (DE); Storl, Alexander, 91077 Hetzles (DE)

(56) Entgegenhaltungen:
- WO-A1-2005/093607
- CN-A- 103 092 980
- DE-A1-102006 003 156
- DE-A1-102006 037 291
- FR-A1- 2 806 494
- US-A1- 2003 167 406
- US-A1- 2012 005 542
- US-A1- 2012 222 048

## Beschreibung

Die Erfindung betrifft ein Verfahren zur automatischen Verarbeitung einer Anzahl von Protokolldateien eines Automatisierungssystems einer technischen Anlage, wie einer Kraftwerksanlage.

Großtechnische Anlagen, wie Dampf- und Gasturbinenanlagen, chemische Anlagen, Stahlwerke, Walzwerke, sind komplexe technische Systeme, die eine Vielzahl von (z. B. mehreren hundert) Komponenten, wie Sensoren, Aktoren, Antriebe etc., aufweisen, von denen jeder gegebenenfalls mehrere Messwerte pro Sekunde zur weiteren Verarbeitung und Übertragung erfasst und bereitstellt.

Zur Überwachung und Steuerung von Komponenten, wie Turbine, Verdampfer, Generator, Sensoren, Antriebe, Aktoren der technischen Anlage, werden die von den Komponenten erhaltenen Daten verarbeitet, analysiert und interpretiert. So ist es möglich, Abweichungen von einem vorgegebenen Normalzustand so früh wie möglich zu erkennen und gegebenenfalls eine Beschädigung und/oder einen Ausfall der Komponente, wie der Turbine, zu verhindern.

Hierbei ist die Menge an auszuwertenden Daten/Messsignalen und die Komplexität möglicher Abhängigkeiten zwischen den Daten/Messsignalen üblicherweise viel zu groß, als dass eine wirksame Analyse der Daten/Messsignale von einer Bedienperson möglich wäre.

Die technische Anlage umfasst dabei zur Steuerung und Überwachung der Anlage ein Automatisierungssystem, das im Allgemeinen in eine Bedien- und Beobachtungsebene, eine Automatisierungs-/Prozessebene und eine Feldebene unterteilt ist, die über eine Kommunikationseinheit, insbesondere einen oder mehrere Datenbussysteme, miteinander verbunden sind.

Die Daten, wie Messsignale, Zustandssignale einzelner Komponenten, wie Sensoren, Aktoren, Antriebe, Turbinen, Automatisierungseinheiten etc., werden üblicherweise in Protokolldateien zusammengefasst, die ein oder mehrere aufgetretene Ereignisse einer oder mehrerer Komponenten und/oder Komponentengruppen beschreiben, und an betreffende Komponenten der technischen Anlage übertragen.

In der Praxis automatischer Steuerung und/oder Überwachung gibt es das Problem der steigenden Anzahl von generierten Protokolldateien bei Auftreten eines Ereignisses in der technischen Anlage, zum Beispiel bei Auftreten eines Störfalls. Typische Ursachen hierfür sind z.B. defekte Sensoren und/oder defekte Anlagenteile, die zusätzliche Messwerte und somit zusätzliche Protokolldateien liefern. Dies erschwert dem Bedienpersonal die Übersichtlichkeit und die Erfassbarkeit der generierten Protokolldateien. Zudem ist es schwierig für das Bedienpersonal, das aufgetretene Ereignis richtig zu beurteilen.

Darüber hinaus wird eine Vielzahl von verschiedenartigen Protokolldateien generiert, deren Inhalte nicht kompatibel und nicht vergleichbar sind.

Aus der US 2003/0167406 A1 ist ein Verfahren zur Bereitstellung einer Alarmmeldung anhand einer Anzahl von Ereignissen einer Anlage bekannt. Das Verfahren umfasst das Bereitstellen einer Vielzahl von Ausgabeinformationen der Anlage, von denen wenigstens einige voneinander verschiedene Formate besitzen. Jede der Ausgabeinformationen enthält ein mit der Anlage in Zusammenhang stehendes Ereignis. Die Ausgabeinformationen werden in ein gemeinsames Format übersetzt, wobei unter Nutzung von Zusatzinformationen enthaltenden Dateien das gemeinsame Format durch Zusatzinformationen ergänzt wird. Die Alarmmeldung wird anhand der Anwendung wenigstens einer Regel eines Regelwerks auf das die Zusatzinformationen enthaltende gemeinsame Format angewendet.

Aus der FR 2 806 494 A1 ist ein Verfahren zum Verwalten und Aktualisieren eines Ereignisprotokolls und zur Reduzierung von Daten einer Anzahl von Ereignisprotokollen (auch als logfile bezeichnet) bekannt, bei denen die Informationen je eines einzelnen Ereignisprotokolls gefiltert und auf diejenigen Informationen des Ereignisprotokolls reduziert werden, die als stichhaltig eingestuft wurden.

Die US 2012/005542 A1 zeigt ein Verfahren und ein System zur Protokolldateiverarbeitung in IT-Systemen um relevante Daten aus Protokolldateien zu extrahieren, Protokolldateien an eine oder mehrere Empfänger automatisch zu verteilen und/oder globale Datenverwaltung einzustellen. Informationsfelder innerhalb von Protokolldateien werden identifiziert und verarbeitet gemäß Regeln, die auf diesen Feldern basieren. Audit- und Compliance-Analyse, Anwendungsüberwachung, Sicherheitsüberwachung und Betriebsanalyse werden dadurch verbessert.

In der DE 10 2006 037291 A1 werden Verfahren und Systeme für den Zugriff auf Prozesssteuerungsprotokollinformationen offenbart. Verfahren und Systeme umfassen den Empfang der Prozesssteuerungsprotokollinformationen aus einer Datenbank, die auf einer Mehrzahl von Protokollierungszeiträumen und mindestens einer Datenabfrage basieren. Die Kategorisierung der Prozesssteuerungsprotokollinformationen erfolgt auf der Grundlage mindestens einer Kategorie aus einer Mehrzahl von Kategorien. Eine Mehrzahl von Ausgabedateien wird auf der Grundlage der Mehrzahl der Protokollierungszeiträume und der kategorisierten Prozesssteuerungsprotokollinformationen erzeugt. Ein Teil der Prozesssteuerungsprotokollinformationen wird aus einer Ausgabedatei aus der Mehrzahl der Ausgabedateien auf der Grundlage der Mehrzahl der Protokollierungszeiträume abgerufen und ausgegeben. Die Aufgabe der Erfindung besteht darin, ein einfaches Verfahren zur automatischen Verarbeitung einer Vielzahl von Protokolldateien eines Automatisierungssystems einer technischen Anlage anzugeben.

Diese Aufgabe wird gemäß den Merkmalen der unabhängigen Patentansprüche gelöst. Bevorzugte Ausführungsformen sind insbesondere den abhängigen Patentansprüchen entnehmbar.

Das erfindungsgemäße Verfahren zur automatischen Verarbeitung einer Anzahl von generierten, insbesondere heterogenen und/oder inkompatiblen Protokolldateien verschiedenen Typs eines Automatisierungssystems einer technischen Anlage umfasst zumindest folgende Schritte:
- Ermitteln einer Anzahl von relevanten Protokolldateien verschiedenen Typs aus der Vielzahl von generierten Protokolldateien anhand mindestens eines Protokollparameters, insbesondere eines Erfassungs-Zeitstempels, eines Erfassungs-Zeitraums, einer Erfassungsart und/oder eines Erfassungsortes,
- Transformieren der ermittelten relevanten Protokolldateien verschiedenen Typs in relevante vereinheitlichte Protokolldateien gleichen Typs mit zugehörigen Datensätzen mittels einer agentenbasierten Software,
- Analysieren und/oder Verarbeitung der relevanten vereinheitlichten Protokolldateien gleichen Typs mittels einheitlicher Auswerteverfahren, wie statistischer Auswertungen, Zeitanalysen, Ereignisanalysen, Musteranalysen, Textanalysen, Sequenzanalysen, und
- Ausgeben und/oder Speicherung der relevanten vereinheitlichten Protokolldateien.

Die mit der Erfindung erzielten Vorteile bestehen insbesondere darin, dass die Ausgabe von Zustands-, Zeit-, Melde- und/ oder Warninformationen unabhängig vom Protokolltyp einheitlich verarbeitet, analysiert und ausgegeben werden. Hierdurch ist die Analyse der Vielzahl von generierten Protokolldateien und deren Inhalt deutlich beschleunigt und übersichtlicher. Zudem können Doppel- oder Mehrfachinformationen reduziert werden, so dass sowohl die Ausgabe der Informationen reduziert und übersichtlicher wird und der Speicherbedarf reduziert ist. Insbesondere können Abhängigkeiten von unterschiedlich generierten Protokolldateien und/oder Plausibilitätsprüfungen/Inkonsistenzen schneller identifiziert und gegebenenfalls ausgegeben und korrigiert werden. Insbesondere ermöglicht das erfindungsgemäße Verfahren ein einziges Analyseverfahren zur vollständigen Analyse aller generierten Protokolldateien aller Typen einer technischen Anlage.

Im ersten Schritt wird die Vielzahl von generierten Protokolldateien zu einer Sequenz oder Gruppe von relevanten Protokolldateien reduziert beispielsweise durch Filterung, zum Beispiel nach Zeit, Ereignis, Ort, und durch Sortierung/Gruppierung. Durch eine solche Reduzierung ist eine einfache und schnelle Analyse der für ein einzelnes Ereignis relevanten Protokolldateien in dieser Sequenz oder Gruppe möglich. Insbesondere können einfache Abhängigkeiten von relevanten Protokolldateien in den ermittelten Sequenzen und/oder deren Korrelationen ohne aufwendige zusätzliche Analyse bestimmt werden.

Zusätzlich oder alternativ können mehrere relevante Protokolldateien zu mindestens einer Gruppe von relevanten Protokolldateien, insbesondere innerhalb einer ermittelten Sequenz, zusammengefasst werden.

Beim Transformieren der ermittelten relevanten Protokolldateien verschiedenen Typs in relevante vereinheitlichte Protokolldateien gleichen Typs mit zugehörigen und optional weiter vereinheitlichten/reduzierten Datensätzen mittels einer agentenbasierten Software werden beispielsweise einfache Textdateien, wie log-, txt-, dmp-, csv-, xml-Dateien mit festen Feldlängen und jeweils einer Zeile pro Datensatz, in CSV- oder XML-Dateien (CSV = comma separated values oder XML = extensible markup language) umgewandelt.

Die agentenbasierte Software ist beispielsweise derart eingerichtet, dass ein Software-Agent auf einem Betriebssystem, insbesondere ein Windows-System, installiert ist. Dieser Software-Agent untersucht die relevanten Protokolldateien (definierte Log-Files) in Echtzeit auf Bedingungen (Conditions), die per reguläre Ausdrücke (regular expressions) definiert werden. Auch besteht die Möglichkeit diese Bedingungen auf relevante Protokolldateien anzuwenden, die vollautomatisiert untersucht werden.

Zum Beispiel kann mittels des Verfahrens bei einer Leiteinheit mit einem windows-basierten Betriebssystem eine CPU-Last ermittelt und beobachtet werden, ob es eine definierte Grenzwertverletzung auf dem Betriebssystem gibt. Ist die CPU-Last höher als 90 % so wird eine Ereignismeldung an eine entfernte Einrichtung, insbesondere ein Remote-Service-Center, gesendet und das Bedienpersonal, insbesondere ein jeweilige Techniker kann pro-aktiv darüber informieren und Maßnahmen ergreifen.

Bei einem weiteren Beispiel kann die relevante Protokolldatei, insbesondere ein Logfile PDLRTSEH.log, auf einen vorgegebenen Inhalt, insbesondere einen Eintrag "ACCESS_VIOLATION", durchsucht werden. Hierzu ist beispielsweise in der relevanten Protokolldatei eines sogenannten WinCC-Scada-Systems ein entsprechendes Modul, beispielsweise ein sogenannte PDLRT- oder Graphics-Runtime-Modul, implementiert. Ist der Eintrag in der relevanten Protokolldatei vorhanden, wird dies an das Remote-Service-Center gesendet.

Darüber hinaus können bereits gruppierte relevante Protokolldateien verschiedenen Typs in eine einzige Gruppendatei gleichen Typs, insbesondere in eine einzige XML-Datei, transformiert werden. Alternativ oder zusätzlich können alle relevanten Protokolldateien in eine einzige Summendatei gleichen Typs, insbesondere in eine einzige XML-Datei, transformiert werden. Auch können die relevanten Protokolldateien verschiedenen Typs in pro Blockgruppe oder Zeile jeweils eine Block-/Zeilendatei gleichen Typs, insbesondere eine XML-Block-/Zeilendatei, transformiert werden. Dabei kann ein herkömmliches Transformationsverfahren verwendet werden. Zusätzlich kann das in der parallelen europäischen Anmeldung mit dem Aktenzeichen 14163510.2 beschriebene Verfahren zur Verarbeitung, insbesondere Komprimierung der Inhalte einer jeden Protokolldatei mittels eines Protokollkomprimierers verwendet werden. Auf den Gegenstand der europäischen Anmeldung mit dem Aktenzeichen 14163510.2, insbesondere die Art und Weise der Komprimierung von Datensätzen der relevanten Protokolldateien, wird hiermit durch Referenzierung Bezug genommen.

Des Weiteren kann das in der parallelen europäischen Anmeldung mit dem Aktenzeichen 14163511.0 beschriebene Verfahren zur Analyse und/oder Evaluierung von mindestens einem Ereignis einer technischen Anlage aus einer Vielzahl von generierten Protokolldateien eines Automatisierungssystems der technischen Anlage, insbesondere zur weiteren Reduzierung der Vielzahl von generierten Protokolldateien zu einer Sequenz von, insbesondere gruppierten relevanten Protokolldateien verwendet werden. Auf den Gegenstand der europäischen Anmeldung mit dem Aktenzeichen 14163511.0, insbesondere die beschriebene Art und Weise der weiteren Reduzierung der generierten Protokolldateien zu einer Sequenz von relevanten Protokolldateien, wird hiermit durch Referenzierung Bezug genommen.

Eine mögliche Ausführungsform sieht vor, dass die Datensätze der relevanten vereinheitlichten Protokolldateien mittels statistischer Auswertungen verarbeitet werden. Beispielsweise können diese mittels einer sogenannten Levenshtein-Distanz verarbeitet werden, wobei die Datensätzen der relevanten vereinheitlichten Protokolldateien kodifiziert und der Kode dieser vereinheitlicht, insbesondere reduziert und verkürzt zur weiteren Beschleunigung der Analyse wird.

Eine weitere Ausführungsform sieht vor, dass die Datensätze der relevanten vereinheitlichten Protokolldateien mittels Zeitanalysen verarbeitet werden. Insbesondere können den Datensätzen zugrundeliegende Erfassungs-Zeitstempel, Erfassungs-Zeiträume, Erfassungsarten und/oder Erfassungsorte ermittelt werden und zur Sortierung und/oder Gruppierung und/ oder Filterung/Reduzierung der Datensätze verwendet werden.

Beispielsweise werden die Datensätze der relevanten Protokolldateien mittels Ereignisanalysen verarbeitet. Alternativ oder zusätzlich können die Datensätze der relevanten vereinheitlichten Protokolldateien mittels Musteranalysen und/oder Textanalysen verarbeitet werden.

Beispielsweise können zwei oder mehrere relevante vereinheitlichte Protokolldateien, welche zu ein- und demselben Zeitpunkt generiert worden sind, zusammengefasst werden. Hierdurch kann die Analyse vereinfacht, insbesondere verkürzt werden, da die aufwendige Ermittlung von Zeitabhängigkeiten zwischen den relevanten vereinheitlichten Protokolldateien entfällt.

Auch können die Datensätze der relevanten vereinheitlichten Protokolldateien mittels Sequenzanalysen und/oder Fehleranalysen verarbeitet werden. Dabei können die genannten Analyseverfahren beliebig kombiniert werden.

Beispielsweise kann mindestens ein Referenzmuster für mindestens eine der Sequenzen von relevanten vereinheitlichten Protokolldateien eines zu analysierenden Zeitraums und/oder eines zu analysierenden Ereignisses ermittelt werden. Für wiederkehrende Ereignisse, insbesondere Zustände und/oder Prozessabläufe in einer technischen Anlage kann mindestens ein Referenzmuster ermittelt werden, das die Reihenfolge der diesen Zustand und/oder diesen Prozessablauf beschreibenden und generierten relevanten vereinheitlichten Protokolldateien beschreibt oder repräsentiert. Hierdurch sind der Vergleich und die Analyse der generierten vereinheitlichten Protokolldateien deutlich vereinfacht.

Das beschriebene Verfahren zeichnet sich dadurch aus, dass die ursprünglich nicht kompatiblen und nicht vergleichbaren Nachrichtenteile der verschiedenartigen Protokolldateien durch die Transformierung aller relevanten Protokolldateien verschiedenen Typs zunächst in vereinheitlichte Protokolldateien eines einzigen gleichen Typs deutlich schneller und einfacher sortiert und analysiert werden können. Zusätzlich können die Datensätze der vereinheitlichten Protokolldateien gleichen Typs mittels des in der parallelen europäischen Anmeldung mit dem Aktenzeichen 14163510.2 beschriebenen Verfahrens zur Verarbeitung von Protokolldateien zur Komprimierung dieser beispielsweise durch Zeichenreduzierung und Kodierung dieser reduzierten Zeichenkette sowie Gruppierung ähnlicher und/oder identischer kodierter Zeichenkette und des in der parallelen europäischen Anmeldung mit dem Aktenzeichen 14163511.0 beschriebenen Verfahrens zur Analyse und/oder Evaluierung von mindestens einem Ereignis einer technischen Anlage aus einer Vielzahl von generierten Protokolldateien eines Automatisierungssystems der technischen Anlage, insbesondere zur weiteren Reduzierung der Vielzahl von generierten Protokolldateien zu einer Sequenz von gruppierten relevanten Protokolldateien weiter verarbeitet werden.

Vorzugsweise wird das Verfahren in einem Automatisierungssystem einer technischen Anlage, wie einer Kraftwerksanlage, verwendet.

In einer einfachen Ausführungsform ist das erfindungsgemäße Verfahren in einer Komponente eines Automatisierungssystems einer technischen Anlage implementiert, wobei das Automatisierungssystem mindestens eine Bedien- und Beobachtungsebene, eine Automatisierungs-/Prozess-Ebene und eine Feldebene, die miteinander über ein Kommunikationssystem verbunden sind, umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Ausführungsbeispiel für ein Automatisierungssystem zur Steuerung und Überwachung einer technischen Anlage, und
- FIG 2: schematisch ein Ausführungsbeispiel für ein Verfahren zur Verarbeitung von Protokolldateien verschiedenen Typs, die im Automatisierungssystem generiert werden.

Einander entsprechende Teile sind in allen Figuren mit den gleichen Bezugszeichen versehen.

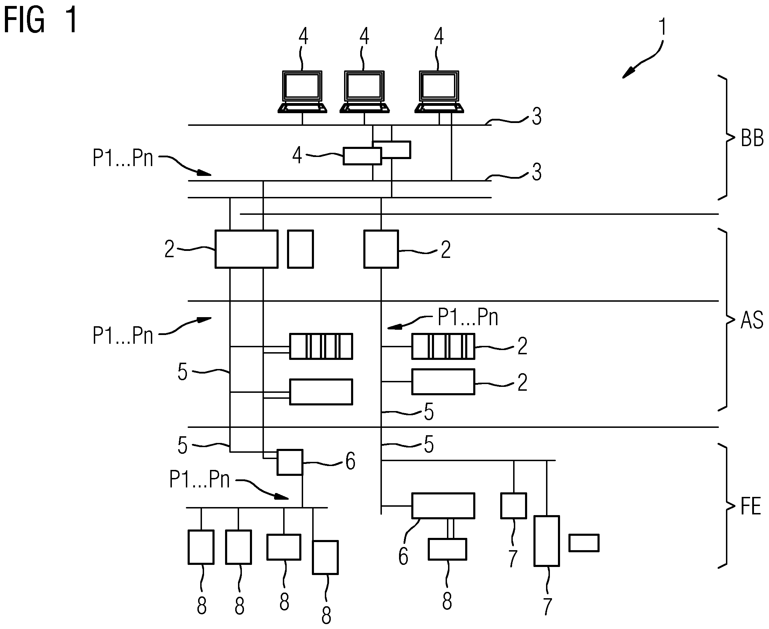

Figur 1 zeigt schematisch in Blockdarstellung ein Ausführungsbeispiel für ein Automatisierungssystem 1 einer technischen Anlage, wie einer Kraftwerksanlage oder einer Chemieanlage.

Das Automatisierungssystem 1 umfasst in einer Prozessebene AS (auch Automatisierungsebene genannt) eine Anzahl von Automatisierungsgeräten 2, die über einen gemeinsamen Datenbus 3 miteinander und mit einer Leiteinheit 4 in einer Bedien- und Beobachtungsebene BB verbunden sind und kommunizieren. Die Automatisierungsgeräte 2 sind darüber hinaus über einen Feldbus 5 mit Feldgeräten 6 in einer Feldebene FE verbunden und kommunizieren miteinander.

Der Datenbus 3 kann beispielsweise ein Ethernet-Bus oder eine andere geeignete Datenübertragungseinheit sein. Der Feldbus 5 kann beispielsweise ein Ethernet-basierter Feldbus 5 oder als eine andere geeignete Datenübertragungseinheit drahtlos oder drahtgebunden ausgebildet sein. Der Datenbus 3 und/oder der Feldbus 5 können dabei ein Computernetzwerk bilden.

Die Automatisierungsgeräte 2 können sowohl aus frei programmierbaren als auch aus speicherprogrammierbaren Prozessoren, insbesondere einer Prozessoreinheit, aufgebaut sein und steuern, regeln und/oder überwachen jeweils mehrere Komponentengruppen 7 oder Teilsysteme der einzelnen Anlagenteile der technischen Anlage. Insbesondere umfasst das Steuern, Regeln und/oder Überwachen der technischen Anlage auch eine Analyse und sonstige Verarbeitung der Daten, wie Messsignale, Steuersignale, Ein- und Ausgangssignale, Zwischensignale, gespeicherte Daten, Verarbeitungsdaten.

Die Leiteinheiten 4 können Datenverarbeitungseinheiten, wie ein Personalcomputer oder eine andere geeignete Bedien- und Beobachtungseinheit sein, mittels welcher die technische Anlage überwacht und gesteuert wird.

Die Feldgeräte 6 können beispielsweise kompakte frei programmierbare oder speicherprogrammierbare Steuerungen, insbesondere eine Prozessoreinheit und/oder zumindest eine teilweise festverdrahtete oder logische Schaltungsanordnung sein, die einzelne Komponenten 8 von Anlagenteilen, wie Messfühler (Sensoren) und/oder Stellglieder (Aktoren) steuern, regeln und/oder überwachen und die über den Feldbus 5 zwecks Kommunikation mit dem Automatisierungsgerät 2 (auch Steuerungsgerät genannt) verbunden sind.

Beim Betrieb einer technischen Anlage, wie einer Kraftwerksanlage, werden über den Datenbus 3 und den Feldbus 5 große Datenmengen in Form von Protokolldateien P1 bis Pn, die Steuerbefehle, Zustandsmeldungen und/oder Störmeldungen umfassen, bewegt, die in der Leiteinheit 4 durch Steuereingriffe ausgelöst bzw. auf Bildschirmen oder anderen Sichtgeräten der Leiteinheit 4 sichtbar gemacht werden. Dabei sind, insbesondere bei Inbetriebnahme und beim An-/Abfahren der Anlage, eine Vielzahl von Steuereingriffen erforderlich, die eine entsprechend große Anzahl von zu beobachtenden Rückmeldungen zur Folge haben. Dies führt zu einer nicht unerheblichen Belastung des Bedienpersonals.

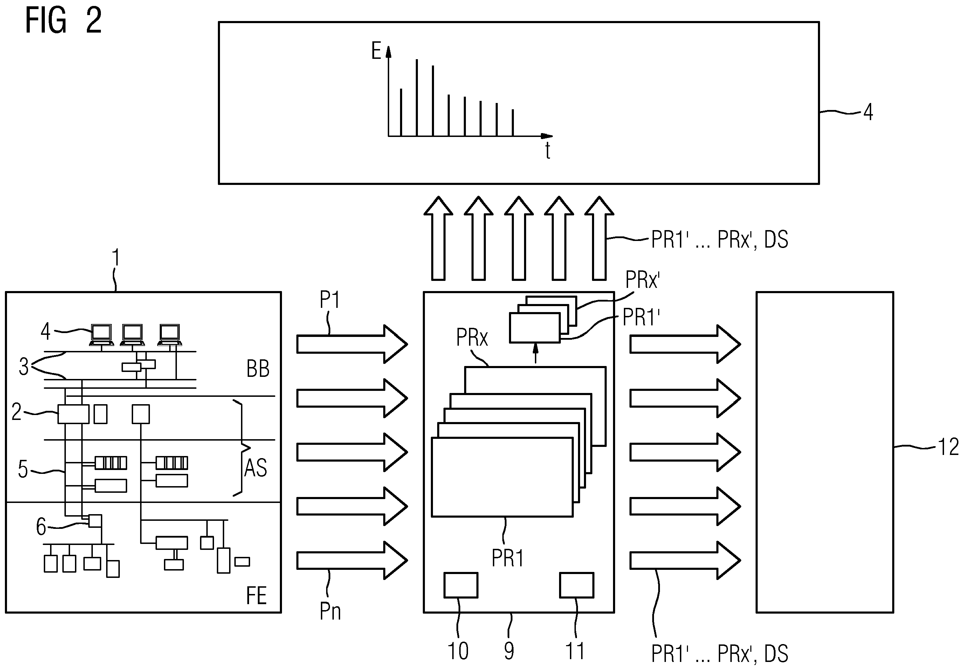

Figur 2 zeigt schematisch ein Ausführungsbeispiel für ein Verfahren zur Verarbeitung, insbesondere Vorverarbeitung von Protokolldateien P1 bis Pn, die im Automatisierungssystem 1 generiert werden und über den Datenbus 3 und/oder den Feldbus 5 übertragen und zwischen den Einheiten des Automatisierungssystems 1, insbesondere zwischen den Bedieneinheiten 4, den Automatisierungsgeräten 2 und den Feldgeräten 6, ausgetauscht werden.

Die Protokolldateien P1 bis Pn umfassen jeweils zumindest einen Erfassungs-Zeitstempel und einen Text, insbesondere eine Nachricht, eine Meldung, einen Zustandstext, welche mindestens ein Ereignis beschreiben. Zusätzlich können die Protokolldateien P1 bis Pn als Text eine Systemzeit, eine Versions-/Revisionsnummer und weitere Informationen umfassen. Dabei können beispielsweise mehrere Protokolldateien P1 bis Pn ein Ereignis oder mehrere Ereignisse beschreiben. Als Protokolldateien P1 bis Pn werden beispielsweise in einem Automatisierungssystem 1 einer technischen Anlage Dateien verschiedenen Typs, beispielsweise *log-, *xml-, *txt-, *nfo- und/oder *dmp-Dateien, erzeugt und generiert.

In zumindest einer der Komponenten des Automatisierungssystems 1 ist insbesondere ein Computerprogrammprodukt implementiert, das direkt in einen Speicher eines digitalen Computers, wie einer Leiteinheit 4, ladbar ist, umfassend Programmcodeteile, die dazu geeignet sind, Schritte des nachfolgend beschriebenen Verfahrens durchzuführen. Alternativ kann das Computerprogrammprodukt auch in ein Automatisierungsgerät geladen werden.

Alternativ kann ein computerlesbares Speichermedium, z.B. ein beliebiger Speicher, vorgesehen sein, der von einem Computer, wie einer Leiteinheit 4, ausführbare Anweisungen (z.B. in Form von Programmcodes) umfasst, die dazu geeignet sind, dass die Leiteinheit 4 Schritte des nachfolgend beschriebenen Verfahrens durchführt.

Das als ein Protokolltransformierer 9 implementierte Verfahren zur automatischen Verarbeitung, insbesondere Vorverarbeitung der Vielzahl von generierten, insbesondere heterogenen oder inkompatiblen Protokolldateien P1 bis Pn umfasst zumindest folgende Schritte:
- Ermitteln einer Anzahl von relevanten Protokolldateien PR1 bis PRx verschiedenen Typs aus der Vielzahl von generierten Protokolldateien P1 bis Pn anhand mindestens eines Protokollparameters, insbesondere eines Erfassungs-Zeitstempels, eines Erfassungs-Zeitraums, einer Erfassungsart und/oder eines Erfassungsortes,
- Transformieren der ermittelten relevanten Protokolldateien PR1 bis PRx verschiedenen Typs in relevante vereinheitlichte Protokolldateien PR1' bis PRx' gleichen Typs mit zugehörigen Datensätzen DS mittels einer agentenbasierten Software,
- Analysieren und/oder Verarbeitung der relevanten vereinheitlichten Protokolldateien PR1' bis PRx' gleichen Typs mittels einheitlicher Auswerteverfahren, wie statistischer Auswertungen, Zeitanalysen, Ereignisanalysen, Musteranalysen, Textanalysen, Sequenzanalysen, und
- Ausgeben und/oder Speicherung der relevanten vereinheitlichten Protokolldateien PR1' bis PRx' mit den zugehörigen Datensätzen DS.

Die Vorverarbeitung und insbesondere Vereinheitlichung der relevanten Protokolldateien PR1 bis PRx durch Transformation in relevante vereinheitlichte Protokolldateien PR1' bis PRx' eines einzigen Typs ermöglicht eine einheitliche Verarbeitung, Analyse und/oder Ausgabe von Zustands-, Zeit-, Melde- und/oder Warninformationen unabhängig vom Protokolltyp. Hierdurch ist die Analyse der Vielzahl von generierten Protokolldateien P1 bis Pn und deren Inhalt deutlich beschleunigt und übersichtlicher. Mit anderen Worten: Das erfindungsgemäße Verfahren ermöglicht ein einziges Analyseverfahren zur vollständigen Analyse aller generierten Protokolldateien P1 bis Pn aller Typen einer technischen Anlage.

Im ersten Schritt wird die Vielzahl von generierten Protokolldateien P1 bis Pn zu einer Sequenz oder Gruppe von relevanten Protokolldateien PR1 bis PRx reduziert beispielsweise durch Filterung, zum Beispiel nach Zeit, Ereignis, Ort, und durch Sortierung/Gruppierung. Hierdurch können einfache Abhängigkeiten von relevanten Protokolldateien PR1 bis PRx in den ermittelten Sequenzen und/oder deren Korrelationen ohne aufwendige zusätzliche Analyse bestimmt werden.

Hierbei kann der Nachrichtenteil eines jeden Datensatzes DS der Protokolldateien P1 bis Pn beispielsweise Textnachrichten, wie Meldungen, Zustände, Texte, Informationen, Warnungen etc. umfassen. Der jeweilige Datensatz DS kann beispielsweise die Form einer Tabelle oder einer Datenbank oder eine andere geeignete Form mit Feldunterteilungen aufweisen.

Der Nachrichtenteil der jeweiligen generierten Protokolldatei P1 bis Pn kann beispielsweise in einem oder mehreren Feldern des zugehörigen Datensatzes DS enthalten sein. Weitere Felder des Datensatzes DS enthalten Protokoll- und/oder Systeminformationen, wie beispielsweise Systemzeit, Versionsnummer, Revisionsnummer etc.

Die Datensätze DS können dabei anhand eines jeweils zugehörigen Zeitstempels sortiert, insbesondere chronologisch sortiert, beispielsweise aufsteigend oder absteigend sortiert werden.

Bei dem zugehörigen Zeitstempel kann es sich insbesondere um einen Erfassungs-Zeitstempel für die zugrunde liegende Nachricht, die insbesondere ein Ereignis, wie "Umgebungstemperatur im zulässigen Bereich", "Erststart aktiviert", "Pumpe ausgefallen", "Turbine gestartet" etc., in der technischen Anlage beschreibt, handeln. Alternativ oder zusätzlich können die Datensätze DS anhand alternativer oder zusätzlicher Protokollparameter, wie Erfassungsort, Erfassungsart und/oder Erfassungszeitraum, sortiert werden.

Beim Transformieren der ermittelten relevanten Protokolldateien PR1 bis PRx verschiedenen Typs in relevante vereinheitlichte Protokolldateien PR1' bis PRx' gleichen Typs mit den Datensätzen DS mittels einer agentenbasierten Software werden beispielsweise einfache Textdateien, wie log-, txt-, dmp-, csv-, xml-Dateien mit festen Feldlängen und jeweils einer Zeile pro Datensatz, in CSV- oder XML-Dateien (CSV = comma separated values oder XML = extensible markup language) umgewandelt.

Je nach Vorgabe können bereits gruppierte relevante Protokolldateien PR1 bis PRx verschiedenen Typs in eine einzige Gruppendatei gleichen Typs, insbesondere in eine einzige XML-Datei, transformiert werden. Alternativ oder zusätzlich können alle relevanten Protokolldateien PR1 bis PRx in eine einzige Summendatei gleichen Typs, insbesondere in eine einzige XML-Datei, transformiert werden.

Als Transformationsverfahren kann ein herkömmliches Transformationsverfahren verwendet werden.

Ursprünglich beinhaltet eine Protokolldatei beispielweise Folgendes:

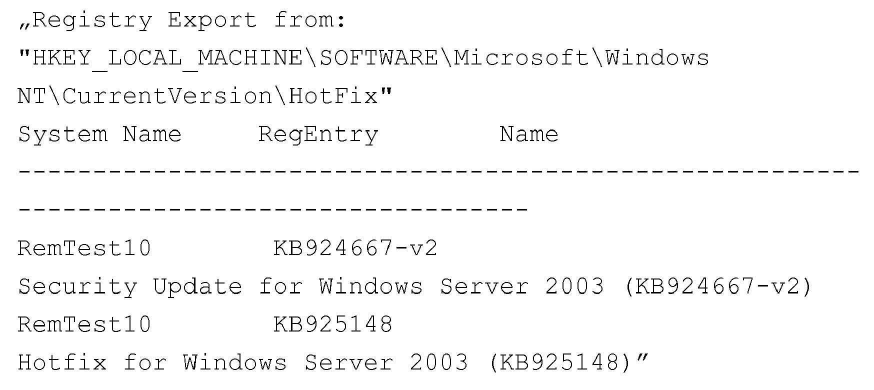

Nach der Transformation beinhaltet die Protokolldatei folgenden Inhalt mit vereinheitlichtem Format, insbesondere nach Entfernung von Leerzeichen, Leerzeilen, etc.:

```
     " <?xml version="1.0" encoding="ISO-8859-1" ?>
     - <Hotfixes>
     - <Entry>
       <System>RemTest10</System>
       <RegEntry>KB924667-v2</RegEntry>
       <Name>Security Update for Windows Server 2003
     (KB924667-v2)</Name>
       </Entry>
     - <Entry>
       <System>RemTest10</System>
       <RegEntry>KB925148</RegEntry>
       <Name>Hotfix for Windows Server 2003 (KB925148)</Name>
       </Entry>
     ..</Hotfixes>"
```

Zusätzlich kann das in der parallelen europäischen Anmeldung mit dem Aktenzeichen 14163510.2 beschriebene Verfahren zur Verarbeitung, insbesondere Komprimierung der Inhalte einer jeden relevanten vereinheitlichten Protokolldatei PR1' bis PRx' mittels eines Protokollkomprimierers 10 verwendet werden.

Des Weiteren kann das in der parallelen europäischen Anmeldung mit dem Aktenzeichen 14163511.0 beschriebene Verfahren zur Analyse und/oder Evaluierung von mindestens einem Ereignis in einer technischen Anlage aus einer Vielzahl von generierten Protokolldateien P1 bis Pn eines Automatisierungssystems 1 der technischen Anlage, insbesondere zur weiteren Reduzierung der Vielzahl von generierten Protokolldateien P1 bis Pn zu einer Sequenz von gruppierten relevanten vereinheitlichten Protokolldateien PR1' bis PRx' mittels eines Protokollanalysators 11 verwendet werden.

Dabei können der Protokollkomprimierer 10 und der Protokollanalysator 11 als separate Einheiten ausgebildet sein und dem Protokolltransformierer 9 nachgeschaltet sein (nicht näher dargestellt). Alternativ können diese als integrierte Einheiten im Protokolltransformierer 9 implementiert sein (wie dargestellt).

Eine mögliche Ausführungsform sieht vor, dass die Datensätze der relevanten vereinheitlichten Protokolldateien PR1' bis PRx' mittels statistischer Auswertungen verarbeitet werden. Beispielsweise können diese mittels einer Wahrscheinlichkeitsrechnungen, insbesondere Eintrittswahrscheinlichkeiten von Ereignissen und der sogenannten Levenshtein-Distanz, verarbeitet werden. Dazu können die Datensätzen DS der relevanten vereinheitlichten Protokolldateien PR1' bis PRx' kodifiziert und der Kode dieser vereinheitlicht, insbesondere zur weiteren Beschleunigung der Analyse reduziert und verkürzt werden.

Eine weitere Ausführungsform sieht vor, dass die Datensätze DS der relevanten vereinheitlichten Protokolldateien PR1' bis PRx' mittels Zeitanalysen verarbeitet werden. Insbesondere können den Datensätzen DS zugrundeliegende Erfassungs-Zeitstempel, Erfassungs-Zeiträume, Erfassungsarten und/oder Erfassungsorte ermittelt werden und zur Sortierung und/oder Gruppierung und/oder Filterung/Reduzierung der Datensätze DS verwendet werden.

Beispielsweise werden die Datensätze DS der relevanten vereinheitlichten Protokolldateien PR1' bis PRx' mittels Ereignisanalysen verarbeitet. Alternativ oder zusätzlich können die Datensätze DS der relevanten vereinheitlichten Protokolldateien PR1' bis PRx' mittels Musteranalysen und/oder Textanalysen verarbeitet werden.

Beispielsweise können zwei oder mehrere relevante vereinheitlichte Protokolldateien PR1' bis PRx', welche zu ein- und demselben Zeitpunkt generiert worden sind, zusammengefasst werden. Auch können die Datensätze DS der relevanten vereinheitlichten Protokolldateien PR1' bis PRx' mittels Sequenzanalysen und/oder Fehleranalysen verarbeitet werden. Dabei können die zuvor beschriebenen Analyseverfahren beliebig kombiniert werden.

Beispielsweise kann mindestens ein Referenzmuster für mindestens eine der Sequenzen von relevanten vereinheitlichten Protokolldateien PR1' bis PRx' eines zu analysierenden Zeitraums und/oder eines zu analysierenden Ereignisses ermittelt werden. Für wiederkehrende Ereignisse, insbesondere Zustände und/oder Prozessabläufe in einer technischen Anlage kann mindestens ein Referenzmuster ermittelt werden, das die Reihenfolge der diesen Zustand und/oder diesen Prozessablauf beschreibenden und generierten relevanten vereinheitlichten Protokolldateien PR1' bis PRx' beschreibt oder repräsentiert.

Hierdurch sind der Vergleich und die Analyse der generierten relevanten? vereinheitlichten Protokolldateien PR1' bis PRx' deutlich vereinfacht.

Das beschriebene Verfahren zeichnet sich dadurch aus, dass die ursprünglich nicht kompatiblen und nicht vergleichbaren Nachrichtenteile oder Datensätze DS der verschiedenartigen Protokolldateien P1 bis Pn durch die Transformierung aller relevanten Protokolldateien PR1 bis PRx verschiedenen Typs zunächst in relevante vereinheitlichte Protokolldateien PR1' bis PRx' eines einzigen gleichen Typs deutlich schneller und einfacher sortiert und analysiert werden können.

Zur weiteren Verarbeitung der relevanten vereinheitlichten Protokolldateien PR1' bis PRx' und/oder deren Datensätze DS können diese zur Ausgabe auf einem Bildschirm und zur weiteren Analyse und Bewertung des/der Ereignisses/e einer der Leiteinheiten 4 zugeführt und beispielsweise in einem Speicher 12 hinterlegt werden.

Obwohl die Erfindung im Detail durch bevorzugte Ausführungsbeispiele näher illustriert und beschrieben wurde, ist die Erfindung nicht durch die offenbarten Beispiele eingeschränkt.

Insbesondere kann der Protokolltransformierer 9 an geeigneter Stelle in eine Komponente des Automatisierungssystems 1 implementiert sein.

## Patentansprüche

1. Verfahren zur automatischen Verarbeitung einer Anzahl von Protokolldateien (P1 bis Pn) verschiedener Formate eines Automatisierungssystems (1) einer technischen Anlage, umfassend folgende Schritte:
- Ermitteln einer Anzahl von relevanten Protokolldateien (PR1 bis PRx) verschiedener Formate aus der Vielzahl von generierten Protokolldateien (P1 bis Pn) anhand mindestens eines Protokollparameters,
- Transformieren der ermittelten relevanten Protokolldateien (PR1 bis PRx) verschiedener Formate in relevante vereinheitlichte Protokolldateien (PR1' bis PRx') gleichen Formats mittels einer agentenbasierten Software,
- Analysieren und/oder Verarbeitung von Datensätzen (DS) der relevanten vereinheitlichten Protokolldateien (PR1' bis PRx') gleichen Formats mittels einheitlicher Auswerteverfahren, und
- Ausgeben und/oder Speicherung der Datensätze (DS) der relevanten vereinheitlichten Protokolldateien (PR1' bis PRx').

2. Verfahren nach Anspruch 1, wobei die Datensätze (DS) der relevanten vereinheitlichten Protokolldateien (PR1' bis PRx') mittels statistischer Auswertungen verarbeitet werden.

3. Verfahren nach Anspruch 1 oder 2, wobei die Datensätze (DS) der relevanten vereinheitlichten Protokolldateien (PR1' bis PRx') mittels Zeitanalysen verarbeitet werden.

4. Verfahren nach einem der vorhergehenden Ansprüche, wobei die Datensätze (DS) der relevanten vereinheitlichten Protokolldateien (PR1' bis PRx') mittels Ereignisanalysen verarbeitet werden.

5. Verfahren nach einem der vorhergehenden Ansprüche, wobei die Datensätze (DS) der relevanten vereinheitlichten Protokolldateien (PR1' bis PRx') mittels Musteranalysen verarbeitet werden.

6. Verfahren nach einem der vorhergehenden Ansprüche, wobei die Datensätze (DS) der relevanten vereinheitlichten Protokolldateien (PR1' bis PRx') mittels Textanalysen verarbeitet werden.

7. Verfahren nach einem der vorhergehenden Ansprüche, wobei die Datensätze (DS) der relevanten vereinheitlichten Protokolldateien (PR1' bis PRx') mittels Sequenzanalysen verarbeitet werden.

8. Verfahren nach einem der vorhergehenden Ansprüche, wobei die Datensätze (DS) der relevanten vereinheitlichten Protokolldateien (PR1' bis PRx') mittels Fehleranalysen verarbeitet werden.

9. Verwendung des Verfahrens nach einem der Ansprüche 1 bis 8 in einem Automatisierungssystem (1) einer technischen Anlage.

10. Automatisierungssystem (1) einer technischen Anlage, umfassend mindestens eine Bedien- und Beobachtungsebene (BB), eine Automatisierungsebene (AS) und eine Feldebene (FE), die miteinander über ein Kommunikationssystem verbunden sind, wobei in mindestens einer der Ebenen das Verfahren nach einem der Ansprüche 1 bis 8 implementiert ist.

## Claims

1. Method for automatically processing a number of log files (P1 to Pn) in different formats of an automation system (1) in a technical plant, comprising steps as follows:
- identifying a number of relevant log files (PR1 to PRx) in different formats from the multiplicity of generated log files (P1 to Pn) on the basis of at least one log parameter,
- transforming the identified relevant log files (PR1 to PRx) in different formats into relevant standardised log files (PR1' to PRx') in the same format by means of agent-based software,
- analysing and/or processing data records (DS) of the relevant standardised log files (PR1' to PRx') in the same format by means of uniform evaluation methods, and
- outputting and/or saving the data records (DS) of the relevant standardised log files (PR1' to PRx').

2. Method according to claim 1, wherein the data records (DS) of the relevant standardised log files (PR1' to PRx') are processed by means of statistical evaluations.

3. Method according to claim 1 or 2, wherein the data records (DS) of the relevant standardised log files (PR1' to PRx') are processed by means of time analyses.

4. Method according to one of the preceding claims, wherein the data records (DS) of the relevant standardised log files (PR1' to PRx') are processed by means of event analyses.

5. Method according to one of the preceding claims, wherein the data records (DS) of the relevant standardised log files (PR1' to PRx') are processed by means of pattern analyses.

6. Method according to one of the preceding claims, wherein the data records (DS) of the relevant standardised log files (PR1' to PRx') are processed by means of text analyses.

7. Method according to one of the preceding claims, wherein the data records (DS) of the relevant standardised log files (PR1' to PRx') are processed by means of sequence analyses.

8. Method according to one of the preceding claims, wherein the data records (DS) of the relevant standardised log files (PR1' to PRx') are processed by means of error analyses.

9. Use of the method according to one of claims 1 to 8 in an automation system (1) of a technical plant.

10. Automation system (1) of a technical plant, comprising at least an operation and observation level (BB), an automation level (AS) and a field level (FE), these being connected to each other via a communication system, wherein the method according to one of claims 1 to 8 is implemented in at least one of the levels.

## Revendications

1. Procédé de traitement automatique d'un certain nombre de fichiers (P1 à Pn) journaux de format différent d'un système (1) d'automatisation d'une installation technique, comprenant les stades suivants :
- détermination d'un certain nombre de fichiers (PR1 à PRx) journaux pertinents de format différent dans la pluralité de fichiers (P1 à Pn) journaux produits à l'aide d'au moins un paramètre de journal,
- transformation des fichiers (PR1 à PRx) journaux pertinents déterminés de format différence en des fichiers (PR1' à PRx') journaux unifiés pertinents de même format, au moyen d'un logiciel reposant sur un agent,
- analyse et/ou traitement de jeux (DS) de données des fichiers (PR1 à PRx) journaux unifiés pertinents de même format, au moyen d'un procédé d'exploitation unitaire, et
- émission et/ou mise en mémoire des jeux (DS) de données des fichiers (PR1' à PRx') journaux unifiés pertinents.

2. Procédé suivant la revendication 1, dans lequel on traite les jeux (DS) de données des fichiers (PR1' à PRx') journaux unifiés pertinents au moyen d'évaluations statistiques.

3. Procédé suivant la revendication 1 ou 2, dans lequel on traite les jeux (DS) de données des fichiers (PR1' à PRx') journaux unifiés pertinents au moyen d'analyses temporelles.

4. Procédé suivant l'une des revendications précédentes, dans lequel on traite les jeux (DS) de données des fichiers (PR1' à PRx') journaux unifiés pertinents au moyen d'analyses d'évènements.

5. Procédé suivant l'une des revendications précédentes, dans lequel on traite les jeux (DS) de données des fichiers (PR1' à PRx') au moyen d'analyses de modèles.

6. Procédé suivant l'une des revendications précédentes, dans lequel on traite les jeux (DS) de données des fichiers (PR1', PRx') au moyen d'analyses de textes.

7. Procédé suivant l'une des revendications précédentes, dans lequel on traite les jeux (DS) de données des fichiers (PR1', PRx') au moyen d'analyses de séquences.

8. Procédé suivant l'une des revendications précédentes, dans lequel on traite les jeux (DS) de données des fichiers (PR1', PRx') au moyen d'analyses de défauts.

9. Utilisation du procédé suivant l'une des revendications 1 à 8 dans un système (1) d'automatisation d'une installation technique.

10. Système (1) d'automatisation d'une installation technique, comprenant au moins un plan (BB) de commande et d'observation, un plan (AS) d'automatisation et un plan (FE) sur site, qui sont reliés entre eux par un système de communication, dans lequel on met en œuvre le procédé suivant l'une des revendications 1 à 8 dans au moins l'un des plans.
